# EUROPÄISCHE PATENTSCHRIFT

(11) **EP 1 972 814 B1**
(45) Veröffentlichungstag und Bekanntmachung des Hinweises auf die Patenterteilung: **25.01.2012**
(21) Anmeldenummer: 08003632.0
(22) Anmeldetag: 28.02.2008
(51) Int. Cl.: F16D 13/75, F16D 13/58

(54) **Tellerfederhebelbaugruppe zum Betätigen einer Reibungskupplung mit integriertem Verschleißausgleich sowie selbstnachstellende Reibungskupplung**
Disc spring lever component for actuating friction clutch with integrated abrasion compensation and self-adjusting friction clutch
Composant de levier de ressort à disque destiné à l'actionnement d'un embrayage à friction à compensation d'usure intégrée et embrayage à friction à repositionnement automatique

(30) Priorität: 22.03.2007 DE 102007013787
(43) Veröffentlichungstag der Anmeldung: 24.09.2008
(73) Patentinhaber: Schaeffler Technologies GmbH & Co. KG, 91074 Herzogenaurach (DE)
(72) Erfinder: Ortmann, Matthias, 77654 Offenburg (DE); Friedmann, Oswald, 77839 Lichtenau (DE)

(56) Entgegenhaltungen:
- EP-A1- 1 568 905
- EP-A2- 1 657 461
- WO-A1-2006/105750

## Beschreibung

Die Erfindung betrifft eine Tellerfederhebelbaugruppe zum Betätigen einer Reibungskupplung mit integriertem Verschleißausgleich sowie selbstnachstellende Reibungskupplung.

Insbesondere bei automatisierten Reibungskupplungen ist eine integrierte Verschleißnachstellung vorteilhaft, mittels der eine Kennlinie, die das übertragbare Kupplungsmoment in Abhängigkeit von der Stellung eines Aktors oder eines Betätigungsgliedes der Kupplung angibt, weitgehend unabhängig von einem Verschleiß der Reibbeläge der Kupplung konstant bleibt. Bekannt sind Nachstelleinrichtungen, bei denen ein Tellerfederhebel, mit dem die Kupplung betätigt wird, eine Antriebsfeder trägt, deren äußerer Umfang sich bei einer Verformung des Tellerfederhebels ändert. Über einem Schwellwert liegende Umfangsänderungen der Antriebsfeder, wie sie beispielsweise bei einem vorbestimmten Verschleiß der Reibbeläge auftreten, werden für eine Verschleißnachstellung genutzt.

Eine in eine Reibungskupplung integrierte Verschleißnachstelleinrichtung ist aus WO 2006/105750 bekannt.

Eine Eigenart solcher selbstnachstellender Reibungskupplungen liegt darin, dass die Baugruppe aus Tellerfederhebel und Antriebsfeder sowie weitere, einen Nachstellvorgang beeinflussende Größen toleranzbehaftet sind, so dass sich für den Klickhub, das ist die Größe der Umfangsänderung der Antriebsfeder, die zum Auslösen einer Verschleißnachstellung erforderlich ist, Abweichungen ergeben.

Der Erfindung liegt die Aufgabe zugrunde, eine Möglichkeit zu schaffen, die vorgenannten Abweichungen im Klickhub einzugrenzen.

Diese Aufgabe wird mit einer Tellerfederhebelbaugruppe zum Betätigen einer Reibungskupplung mit integriertem Verschleißausgleich gelöst, welche Tellerfederhebelbaugruppe einen Tellerfederhebel und eine Antriebsfeder enthält, welcher Tellerfederhebel einen in Umfangsrichtung durchgehenden, radial äußeren Ringscheibenbereich aufweist, von dem axial einwärts gerichtete Federzungen ausgehen, und welche Antriebsfeder einen mit einem mit einem radialen Spalt versehenen Ringteil aufweist, von dem radial einwärts gerichtete Speichen ausgehen, die an dem Tellerfederhebel befestigt sind, wobei ein an einer Seite des Spaltes befindlicher Endbereich des Ringteils zumindest in Umfangsrichtung relativ zur Antriebsfeder festgelegt ist und der auf der anderen Seite des Spaltes befindliche Endbereich des Umfangsrings mit einer Klinke versehen ist und die Anordnung der Antriebsfeder auf dem Tellerfederhebel derart ist, dass sich die Weite des Spaltes bei einer konischen Verformung des Tellerfederhebels ändert, wodurch sich die Klinke in Umfangsrichtung relativ zu dem in Umfangsrichtung festgelegten Endbereich bewegt und diese Bewegung für eine Verschleißnachstellung nutzbar ist, bei welcher Tellerfederhebelbaugruppe der zumindest in Umfangsrichtung des Tellerfederhebels festgelegte Endbereich des Ringteils der Antriebsfeder ein starr an dem Tellerfederhebel befestigtes Anschlagbauteil aufweist, in dem ein vom Ringteil ausgehender Arm derart geführt ist, dass er in Umfangsrichtung begrenzt beweglich ist.

Vorteilhafter Weise ist am Ende des Arms ein Führungsteil ausgebildet, das in einer in dem Anschlagbauteil ausgebildeten Kulisse in Umfangsrichtung um eine begrenzte Strecke beweglich geführt ist.

Vorteilhaft ist das Anschlagbauteil abnehmbar am Tellerfederhebel befestigt.

Weiterhin ist vorteilhaft, wenn das Führungsteil von einem Abdeckteil überdeckt wird.

Bei einer vorteilhaften Ausführungsform der erfindungsgemäßen Tellerfederhebelbaugruppe ist an der Tellerfederhebelbaugruppe ein in seiner Position relativ zu dem an dem Tellerfederhebel zumindest in Umfangsrichtung festgelegten Endbereich des Ringteils ein um eine zur Ebene des Tellerfederhebels etwa senkrechte Achse drehbares Zahnrad gelagert, das mit einer Umfangsverzahnung ausgebildet ist, die mit der Klinke in in eine Drehbarkeitsrichtung des Zahnrades bewegungsübertragendem Eingriff ist und das mit Eingriffsmitteln versehen ist, die geeignet sind, bei einer Verdrehung des Zahnrades eine Verschleißnachstellung zu bewirken.

Das Zahnrad wird vorteilhafter Weise von einem an dem Anschlagbauteil befestigten Abdeckteil überdeckt.

Eine selbstnachstellende Reibungskupplung enthält vorteilhafter Weise eine erfndungsgemäße Tellerfederhebelbaugruppe.

Eine erfindungsgemäße selbstnachstellende Reibungskupplung kann beispielsweise derart aufgebaut sein, dass sich ein radial äußerer Umfangsbereich des Tellerfederhebels über Rampenflächen an einem mit einer Anpressplatte der Reibungskupplung verbundenen Zuganker abstützt und der Tellerhebel sich radial innerhalb seiner Abstützung am Zuganker an seiner der Abstützung am Zuganker gegenüberliegenden Seite an einem gehäusefesten Bauteil abstützt und ein radial innerer Umfangsrand der Federzungen für eine Betätigung der Reibungskupplung axial beweglich ist, wobei eine Verschleißnachstellung infolge einer überschwelligen Bewegung der Klinke relativ zu dem zumindest in Umfangsrichtung des Tellerfederhebels festgelegten Endbereich des Ringteils der Antriebsfeder zu einer Verdrehung des Tellerfederhebels relativ zu dem Zuganker führt.

Die Erfindung wird im Folgenden anhand schematischer Zeichnungen beispielsweise und mit weiteren Einzelheiten erläutert, wobei zum besseren Verständnis der Erfindung zunächst an sich bekannte Anordnungen erläutert werden.

In den Figuren stellen dar:
- Fig. 1: einen Prinziphalbschnitt durch eine an sich bekannte Reibungskupplung,
- Fig. 2: ein Funktionsprinzip einer an sich bekannten Verschleißnachstellung,
- Fig. 3: eine Aufsicht auf die Anordnung gemäß Fig. 2 zur weiteren Erläuterung des Funktionsprinzips,
- Fig. 4: eine Aufsicht auf Teile eine Reibungskupplung mit einem Schneckenrad zur Verschleißnachstellung,
- Fig. 5: einen Schnitt durch die Anordnung gemäß Fig. 4 in der Ebene VN,
- Fig. 6: eine die Teilansicht der Anordnung gemäß Fig. 4, geschnitten längs der Ebene VI/VI,
- Fig. 7: einen perspektivische Aufsicht auf eine Kupplung mit gegenüber der Fig. 4 abgeänderter Anbringung des Schneckenrades,
- Fig. 8: eine Aufsicht auf einen Ausschnitt der Fig. 7, und
- Fig. 9: eine Aufsicht entsprechend der Fig. 8 bei abgenommener Abdeckung zur Erläuterung der Erfindung.

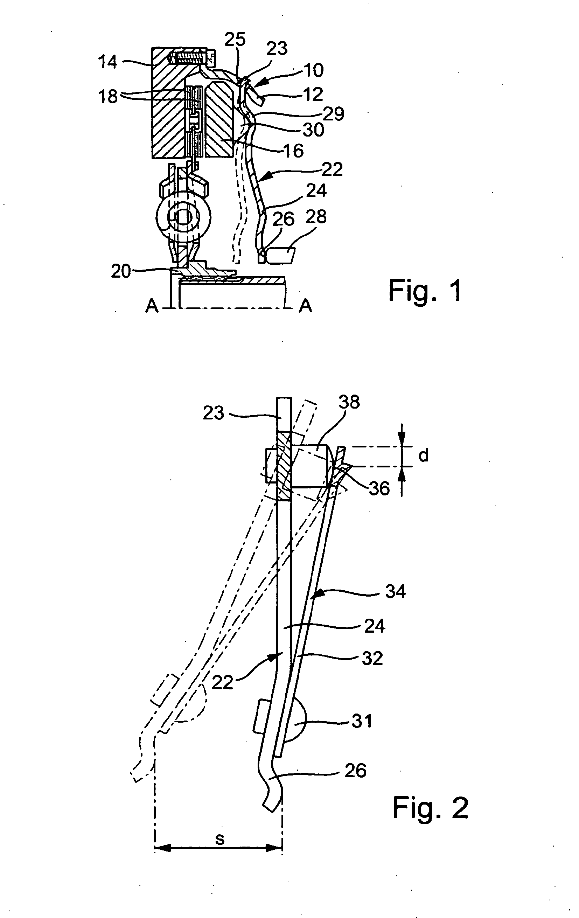

Fig. 1 zeigt einen Halbschnitt durch eine an sich bekannte Reibungskupplung 10 mit der Drehachse A-A.

Die Kupplung enthält einen Deckel bzw. ein Gehäuse 12, der bzw. das starr mit einer Gegendruckplatte 14 und drehfest mit einer Schwungscheibe einer Brennkraftmaschine verbunden ist. Weiter ist eine mit dem Gehäuse 12 drehfest, jedoch axial verschiebbar verbundene Anpressplatte 16 vorgesehen, mittels der Reibbeläge 18 gegen die Gegendruckplatte 14 pressbar sind, welche Reibbeläge an einer Kupplungsscheibe 20 angebracht sind, die drehfest mit einer Welle 21, beispielsweise einer Getriebeeingangswelle, verbunden ist.

Zum axialen Bewegen der Anpressplatte 16 ist ein insgesamt ringscheibenförmiger Tellerfederhebel 22 vorgesehen, der aus einzelnen in Umfangsrichtung nebeneinander angeordneten, radial einwärts gerichteten und radial außen über einen in Umfangsrichtung geschlossenen Ringscheibenbereich 23 miteinander verbundenen Federzungen 24 besteht. Im dargestellten Beispiel stützt sich der Tellerfederhebel 22 an seinem äußeren Umfangsrand 25 an dem Gehäuse 12 ab und ist an seinem inneren Umfangsrand 26 mittels eines Betätigungsglieds 28 axial bewegbar. Das Betätigungsglied 28 enthält beispielsweise ein mit der Achse A-A konzentrisches Ringlager, so dass eine lineare Bewegung eines ortsfesten Aktors in eine lineare Bewegung des inneren Umfangsrands 26 des sich drehenden Tellerfederhebels 22 umsetzbar ist.

Der Tellerfederhebel 22 wirkt über Rampenflächen 29 mit Rampenflächen 30 der Anpressplatte 16 zusammen, wobei die Rampenflächen in Umfangsrichtung mit unterschiedlicher Dicke ausgebildet sind, so dass eine Relativdrehung zwischen der Anpressplatte 16 und dem Tellerfederhebel 22 einen Ausgleich von Verschleiß der Reibbeläge 18 oder sonstigem Verschleiß in Elementen der Kupplung ermöglicht. Gepunktet ist die Stellung des Tellerfederhebels 22 eingezeichnet, in der die Anpressplatte 16 gegen die Reibbeläge 18 gedrückt ist, d.h. die Kupplung geschlossen oder zugedrückt ist. Die mit ausgezogenen Linien dargestellte Stellung des Tellerfederhebels 22 entspricht dem offenen bzw. nicht eingerückten Zustand der Kupplung.

In an sich bekannter Weise kann die Kupplung durch einfache Umkonstruktion als zugedrückte, zugezogene oder aufgedrückte bzw. aufgezogene Kupplung konstruiert sein.

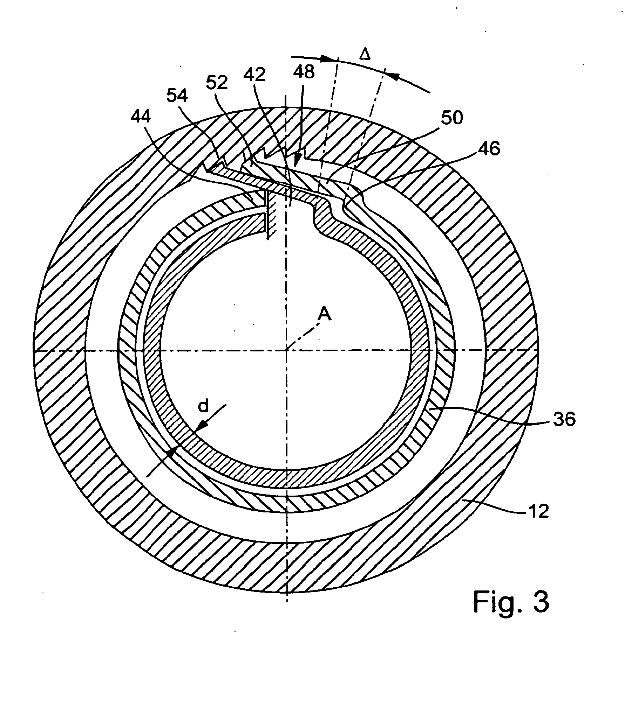

Fig. 2 zeigt in Verbindung mit Fig. 3 das Grundprinzip einer an sich bekannten Verschleißnachstellvorrichtung. Dabei zeigt Fig. 2 einen Halbschnitt durch den Tellerfederhebel 22 mit zugehörigen Bauteilen und Fig. 3 eine Aufsicht auf Elemente der Fig. 2 zur Erläuterung der Verschleißnachstellung.

Gemäß Fig. 2 sind die Federzungen 24 des Tellerfederhebels 22 beispielsweise durch Nieten 31 mit Speichen 32 einer insgesamt mit 34 bezeichneten und insgesamt konzentrisch zum Tellerfederhebel angeordneten Antriebsfeder verbunden, die einen äußeren Ringteil 36 aufweist, der die Speichen 32 verbindet. Die Antriebsfeder 34 stützt sich an dem Tellerfederhebel 22 über Distanzstücke 38 ab, die beispielsweise mit dem Tellerfederhebel 22 vernietet sind und zu dem Ringteil 36 hin eine ballige Oberfläche aufweisen.

Wenn die Kupplung eingerückt wird, wird der Tellerfederhebel 22 an seinem inneren Umfangsrand 26 gemäß Fig. 2 um die Strecke s nach links bewegt und schwenkt dabei um eine am Gehäuse 12 (Fig. 1) ausgebildete Gegenlagerung, an der sich der äußere Ringscheibenbereich 23 abstützt. Die Ringachse dieser Schwenklagerung liegt vorteilhafter Weise in radialer Nähe des Bereiches, in dem die Distanzstücke 38 mit dem Tellerfederhebel 22 verbunden sind.

Wie aus der Fig. 2 unmittelbar ersichtlich, bleibt beim Verschwenken des Tellerfederhebels 22 der Abstand zwischen den Nieten 30 und dem Kraftrand 40 im Wesentlichen konstant, so dass sich das durch den Tellerfederhebel 22, die Antriebsfeder 34 und das Distanzstück 38 gebildete Dreieck derart verformt, dass sich die Antriebsfeder 34 unter Abgleiten auf dem Distanzstück 38 mit ihrem Ringteil 36 um die Strecke d radial einwärts bewegt. Die Verschwenkung ist jeweils mit einer konischen Verformung der verformten Bauteile verbunden.

Fig. 3 verdeutlicht die Verhältnisse in Aufsicht und zeigt zusätzlich weitere funktionswesentliche Details der Anordnung. Der Ringteil 36 ist mit einem radialen Spalt bzw. Spalt 42 versehen. Ein dem Spalt 42 benachbarter Endbereich 44 des Ringteils 36 ist in Umfangsrichtung relativ zu dem Gehäuse 12 (Fig. 1) der Kupplung fixiert. Der andere, an den Spalt 42 grenzende Endbereich 46 des Ringteils 36 ist mit einer Klinke 48 versehen, die aus einem den Spalt 42 radial außen überlagernden Federarm 50 besteht, der an seinem freien Ende wenigstens einen Zahn 52 aufweist, der von dem Federarm 50 radial auswärts in Eingriff in eine Verzahnung 54 gedrängt ist. Die Verzahnung 54 ist am Gehäuse 12 oder an einem eigenen Bauteil, beispielsweise einem Verstellring, ausgebildet. Wie ersichtlich, ist der Zahneingriff derart, dass bei einer Bewegung der Klinke 48 relativ zu der Verzahnung 54 in Gegenuhrzeigerrichtung die Klinke die Verzahnung unter elastischer Verformung des Federarms 50 im Sinne eines Freilaufes überläuft, wohingegen in Gegenrichtung ein Drehmoment übertragender Eingriff zwischen dem Zahn 52 und der Verzahnung 54 besteht.

Wenn der mit einem Schlitz bzw. Spalt versehene Ringteil 36 aus der ausgezogenen Stellung, die der nicht betätigten Stellung der Kupplung bzw. der in Fig. 2 ausgezogenen Stellung entspricht, durch Betätigen der Kupplung um den Radialweg d nach innen gezogen wird (gestrichelt dargestellte Stellung), deckt er aufgrund seiner konstanten Umfangslänge einen größeren Winkelbereich ab, d.h. die Breite des Spaltes 42 nimmt um das Maß Δ ab. Da der Endbereich 44 des Ringteils 36 in tangentialer Richtung festgelegt ist, führt dies zu einer Tangentialbewegung bzw. Bewegung in Umfangsrichtung um die Strecke A des mit der Klinke 48 versehenen Endbereichs 46 des Ringteils 36. Dies wird dadurch ermöglicht, dass der Ringteil 36 über biegeweiche Speichen 32 (in Fig. 3 nicht dargestellt) mit dem Tellerfederhebel 22 verbunden ist und die Berührstellen zwischen dem Ringteil 36 und den Distanzstücken 38 eine tangentiale Gleitbewegung zulassen. Durch diesen Mechanismus entsteht ein nahezu lineares Verhältnis zwischen Einrückweg bzw. Schwenkwinkel des Tellerfederhebels 22 und dem Tangentialweg Δ der Antriebsfeder 34 bzw. von deren Ringteil 36. Im Normalfall reicht der Tangentialweg an der Klinke 48 gerade nicht aus, um in den nächsten Zahn der Verzahnung 54 zu springen. Mit zunehmendem Kupplungsverschleiß erhöht sich jedoch die Tangentialbewegung und die Klinke erreicht die nächste Zahnlücke. Beim nachfolgenden Öffnen der Kupplung schiebt die Antriebsfeder bzw. der Ringteil 36 die Klinke fest in die Verzahnung zurück, wobei die Klinke an einem Zurückgleiten gehindert ist und die Antriebsfeder somit über die Klinke eine Tangentialkraft auf den Rampenmechanismus 29, 30 (Fig. 1) ausübt, so dass durch eine Relativverdrehung zwischen dem Tellerfederhebel und dem Gehäuse eine Nachstellung erzielt wird. Das Verhältnis von d zu A lässt sich durch die Konstruktion des Verbandes Tellerfederhebel-Antriebsfeder beeinflussen.

Das geschilderte Grundprinzip lässt sich in unterschiedlicher Weise zur Verschleißnachstellung nutzen:

Die Antriebsfeder 34 bewirkt bei Belagverschleiß eine Verschiebung der Klinke 48 relativ zu der Verzahnung 54, die als Umfangsverzahnungssegment ausgebildet ist und über einen Umfangswinkelbereich reicht, der zum Ausgleich des gesamten Verschleißes ausreicht. Welches Bauteil dabei feststeht und welches sich dreht, hängt von der Konstruktion ab. Wenn die Verzahnung feststeht, wird der Tellerfederhebel mit Rampen versehen und ist relativ zum Kupplungsgehäuse verdrehbar. Die Antriebsfeder kann sich dann zusammen mit dem Tellerfederhebel verdrehen. Die Rampen des Tellerfederhebels verändern die Axialposition der Anpressplatte und gleichen den Verschleiß aus.

Wenn die Antriebsfeder dazu genutzt wird, um einen Verstellring (nicht dargestellt) anzutreiben, wird der Tellerfederhebel-Antriebsfeder-Verbund im Kupplungsgehäuse gegen Verdrehen gesichert. Die Verzahnung ist dann Teil des mit Rampen versehenen Verstellrings, wobei die Rampen sowohl zwischen dem Tellerfederhebel und dem Verstellring als auch zwischen dem Verstellring und einem mit Anpressplatte drehfest verbundenem Bauteil angeordnet sein können.

Bei einer abgeänderten Ausführungsform, bei der die Klinke 48 den Spalt 42 beispielsweise nicht vollständig überbrückt, ist auch der Endbereich 44 mit einer Verzahnung ausgebildet, die in eine Richtung bewegungsübertragend in eine Gegenverzahnung eingreift, die in dem Bauteil ausgebildet ist, in dem auch die Verzahnung 54 ausgebildet ist. Dadurch kann die Antriebsfeder bzw. der Tellerfederhebel verdrehsicher gehalten werden, während die Klinke 48 die Verzahnung 54 überläuft.

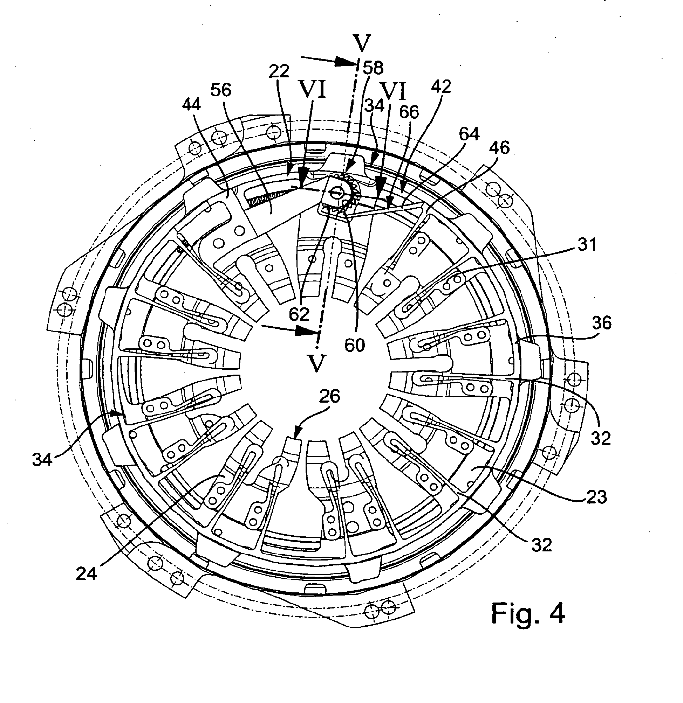

Im Folgenden wird eine abgeänderte Ausführungsform einer Verschleißnachstelleinrichtung, anhand der Fig. 4 bis 6 erläutert:

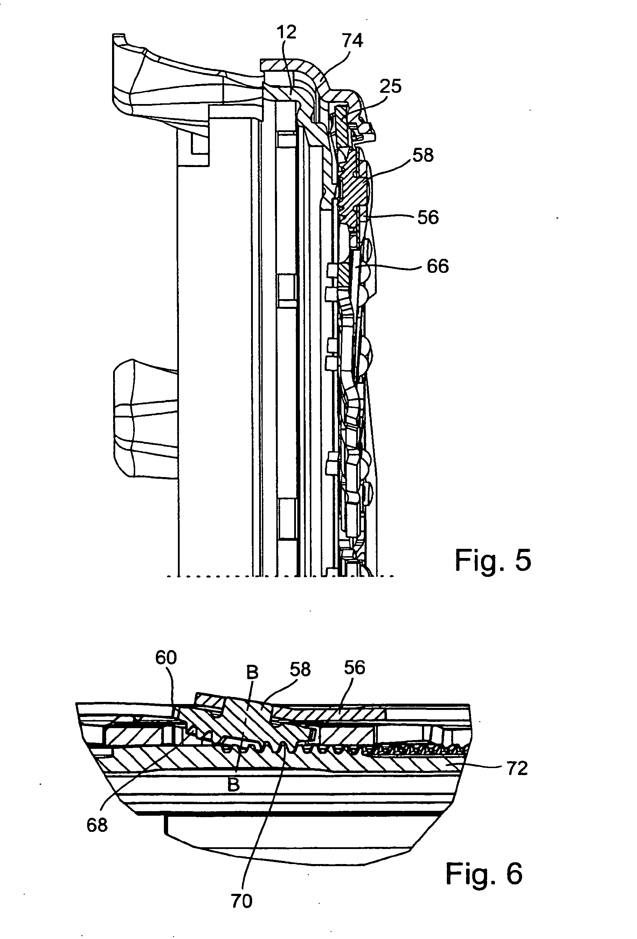

Fig. 4 zeigt eine Aufsicht auf den in Fig. 1 nicht mit den Details der Fig. 4 bis 6 dargestellten Tellerfederhebel 22. Fig. 5 zeigt einen Schnitt längs V-V der Fig. 4 und Fig. 6 zeigt einen Schnitt längs der Linie VI-VI der Fig. 4, wobei sich funktional entsprechende Bauteile mit denselben Bezugszeichen belegt sind, wie in Fig. 1 bis 3.

Die Weite des Spaltes 42 des Ringteils 36 der Antriebsfeder 34 ist größer als bei der Ausführungsform gemäß Fig. 3.

Im dargestellten Beispiel sei angenommen, dass sich die Weite des Spaltes 42 verkleinert, wenn der innere Umfang des Tellerfederhebels 22 gemäß Fig. 1 nach rechts bewegt wird. Die Weite ist minimal, wenn das Betätigungsbauteil 28 aus der Stellung gemäß Fig. 1 nach rechts über die der offenen Stellung der Kupplung hinaus gehende Ruhelage verschoben wird bzw. der Tellerfederhebel 22 infolge von zuviel Verschleiß der Reibbeläge 18 völlig kraftlos wird.

Mit dem gemäß Fig. 4 links des Spaltes 42 angeordneten Endbereich 44 der Antriebsfeder 34 ist ein Blattfederarm 56 beispielsweise durch Nieten starr verbunden, an dessen freiem Ende ein Schneckenrad 58 drehbar gelagert ist. Das Schneckenrad 58 ist an seinem Umfang mit einer Verzahnung 60 ausgebildet, in die eine Mitnehmerverzahnung 62 eingreift, die am Ende eines Federarms 64 ausgebildet ist, der von dem rechts des Spaltes befindlichen Endbereich 46 des Ringteils 36 der Antriebsfeder 34 vorsteht. Die Mitnehmerverzahnung 62 enthält mindestens einen Zahn und bildet zusammen mit dem Federarm 64 eine Klinke 66, die in einer Richtung sperrt und in die andere Richtung "frei läuft". Die Klinke 66 entspricht somit der Klinke 48 der Fig. 3.

Der Federarm 64 ist derart ausgebildet, dass er die Mitnehmerverzahnung 62 in Eingriff in die Umfangsverzahnung 60 drängt. Die Verzahnungen 62 und 60 sind derart geformt, dass im dargestellten Beispiel gemäß Fig. 4 die Mitnehmerverzahnung 62 das Schneckenrad 58 in Gegenuhrzeigerrichtung dreht, jedoch eine Drehung des Schneckenrades 58 in Uhrzeigerrichtung nicht zwangsläufig erfolgt, sondern sich die Verzahnungen dabei überlaufen können.

Wie aus den Fig. 4 und 5 ersichtlich, ist das Schneckenrad 58 an seiner Unterseite mit einer spiralförmig verlaufenden Schneckenrille 68 versehen. Die Achse B-B, um die das Schneckenrad 58 drehbar im Blattfederarm 56 gelagert ist, ist zur Umfangsrichtung derart etwas geneigt, dass nur einer der beiden bezogen auf die Drehachse B-B in Umfangsrichtung liegenden Bereiche der Schneckenrille 68 in eine Gegenverzahnung 70 eingreift, deren Zähne radial gerichtet sind und die in einem mit dem Gehäuse 12 starr verbundenen Bauteil oder am Gehäuse selbst ausgebildet ist. Im Unterschied zur Ausführungsform gemäß Fig. 1 untergreift der Umfangsrand 25 des Tellerfederhebels 22 einen Zuganker 74, der in an sich bekannter Weise eine Grundplatte der Kupplung übergreift und eine gemäß Fig. 5 linksseitig angeordnete Anpressplatte (nicht dargestellt) betätigt.

Die Funktion der Verschleißnachstelleinrichtung ist folgende:
Es sei angenommen, die Weite des Spaltes 42 bzw. die Länge des äußeren Umfangs der Antriebsfeder 34 nehme bei Bewegung des Tellerfederhebels 22 aus der gepunkteten Stellung der Fig. 1 in die durchgezogene Stellung bzw. zur gezielten Nachstellung der Kupplung über die durchgezogen dargestellte Stellung hinaus nach rechts über ein vorbestimmtes Maß hinaus ab. Wenn dieses Maß bzw. dieser Schwellwert das Modul der Verzahnungen 60, 62 übersteigt, überfährt die Mitnehmerverzahnung 62 die Umfangsverzahnung 60 gemäß Fig. 4 nach links, so dass bei einer anschließenden Rückkehr des Tellerfederhebels in die Stellung gemäß Fig. 1 das Schneckenrad 58 in Gegenuhrzeigerrichtung verdreht wird. Infolge des Eingriffs der Schneckenrille 68 in die Gegenverzahnung 70, wobei dieser Eingriff durch eine entsprechende Vorspannung des Blattfederarms 56 gewährleistet ist, führt dies zu einer Relativverdrehung zwischen dem Tellerfederhebel 22 und dem gehäusefesten Bauteil 72 bzw. dem Gehäuse 12, wodurch sich ein axialer Abstand zwischen dem Umfangsrand 24 und dem Zuganker 74, die sich über nicht dargestellte Rampenflächen aneinander abstützen, im Sinne einer Verschleißnachstellung verändert.

Der Blattfederarm 56, der das Schneckenrad 58 axial in die Gegenverzahnung 54 drängt, überträgt auch das zum Verdrehen notwendige Drehmoment zwischen dem Gehäuse und der Ringscheibenfeder.

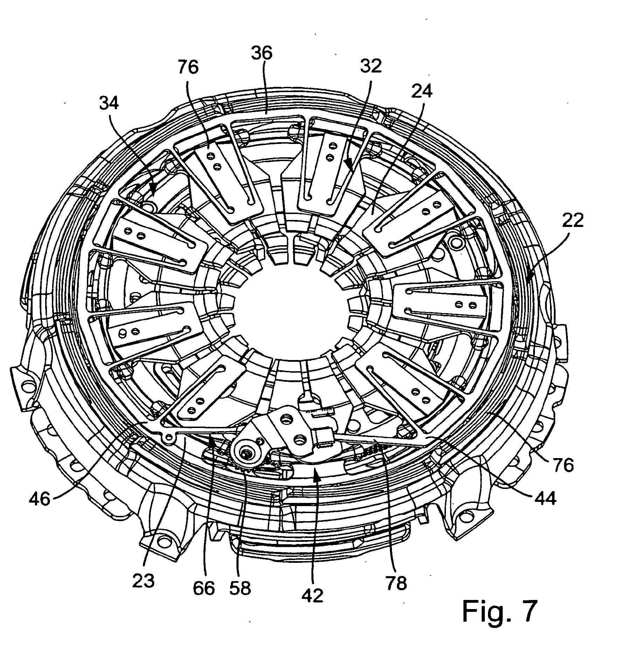

Fig. 7 zeigt eine perspektivische Aufsicht auf eine selbstnachstellende Kupplung mit einer gegenüber der Ausführungsform gemäß Fig. 4 abgeänderten Baugruppe aus Tellerfederhebel 22 und Antriebsfeder 34.

Die Speichen 32, die vom Ringteil 36 der Antriebsfeder 34 radial einwärts vorstehen, sind als Stege von Stanzblechteilen ausgebildet, die an ihrem inneren Ende miteinander verbunden sind, wobei von der radial inneren Verbindung eine Lasche 76 radial auswärts vorsteht, die mit einer Federzunge 24 des Tellerfederhebels 22 oder mit dessen in Umfangsrichtung durchlaufendem Ringscheibenbereich 23 vernietet ist. Für die Speichen 32 gibt es zahlreiche weitere Ausführungsmöglichkeiten, solange die Funktionalität gewährleistet ist, dass sich die Weite des Spaltes 42 bzw. des äußeren Umfangs der Antriebsfeder 34 bei einer konischen Verformung des Tellerfederhebels 22 ändert.

Der Ringteil 36 der Antriebsfeder 34 liegt bei der Ausführungsform gemäß Fig. 7 unmittelbar auf einer Auswölbung des Ringscheibenbereiches 23 des Tellerfederhebels 22 auf, dessen, radial äußerer Bereich mit Rampenflächen 76 ausgebildet ist.

Ein Problem, das sich bei einer aus einem Tellerfederhebel 22 und einer daran angebrachten Antriebsfeder 34 häufig stellt, liegt darin, dass der so genannte Klickhub, das ist die von der konischen Verformung des Tellerfederhebels 22 abhängige Umfangsänderung des Ringteils 36 der Antriebsfeder 34 bzw. die Bewegung der Klinke relativ zu der Verzahnung, mit der die Klinke in Eingriff ist, abhängig von Toleranzen der Bauteile selbst oder von Zusammenbautoleranzen ändert. Dieser Klickhub ist genauer diejenige Strecke, um die sich die an der Klinke 66 ausgebildete Verzahnung 62, die lediglich aus einem Zahn bestehen kann, längs der Umfangsverzahnung 60 des Schneckenrades 58 bewegen muss, damit sie um wenigstens einen Zahn der Umfangsverzahnung weiter springt.

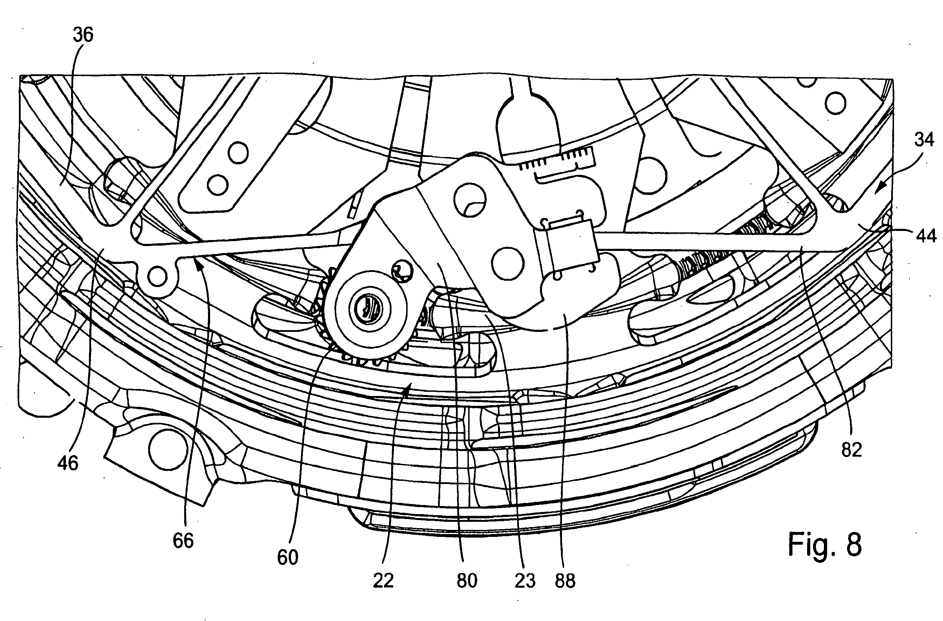

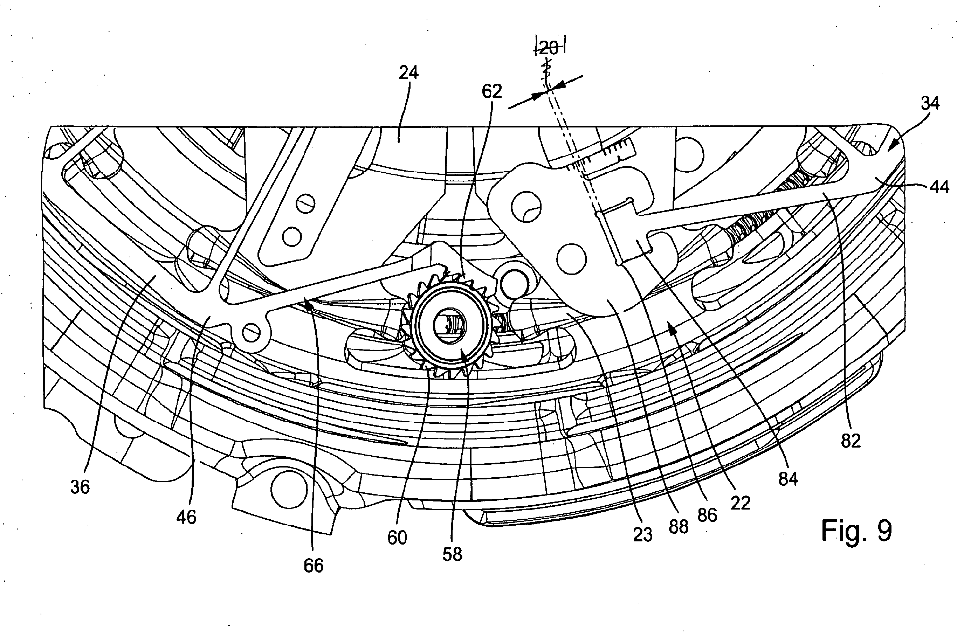

Nachfolgend wird anhand von Details der Ausführungsform der Baugruppe gemäß Fig. 7, die in den Fig. 8 und 9 dargestellt sind, erläutert, wie dieser Klickhub trotz Bauteil- und Zusammenbautoleranzen in vorbestimmter Weise festgelegt werden kann.

Im Unterschied zur Ausführungsform gemäß Fig. 4 ist, wie aus Fig. 9, die die Ausführungsform gemäß Fig. 7 bzw. Fig. 8 bei abgenommenem Abdeckbauteil 80 zeigt, das Schneckenrad 58 nicht unmittelbar an dem Blattfederarm 66 gemäß Fig. 4, sondern am Tellerfederhebel 22 im Bereich von dessen Ringscheibenbereich 23 bzw. im Übergangsbereich vom Ringscheibenbereich 23 zu den Federzungen 24 gelagert. Im Unterschied zur Ausführungsform gemäß Fig. 4 ist weiter der dort starr mit dem Tellerfederhebel 22 verbundene Endbereich 44 des Ringteils 36 der Antriebsfeder 34 nicht starr mit dem Tellerfederhebel 22 verbunden sondern mit einem gewissen Spiel in Umfangsrichtung. Dies wird dadurch erreicht, dass vom Endbereich 44 ein Arm 82 ausgeht, der in einem Führungsteil 84 endet, das in einer Kulisse 86 in Umfangsrichtung des Tellerfederhebels 22 um eine Strecke w beweglich ist. Die Kulisse 82 ist in einem Anschlagbauteil 88 ausgebildet, das starr mit dem Tellerfederhebel 22 verbunden ist.

An dem Anschlagbauteil 88 ist das Abdeckbauteil 80 befestigbar, so dass es das Schneckenrad 58 und das Führungsteil 84 überdeckt, wodurch das Schneckenrad 58 sicher am Tellerfederhebel 22 gelagert bzw. gehalten ist und das Führungsteil 84 sicher innerhalb der Kulisse 86 geführt ist.

Zur Einstellung des Klickhubs kann die Zahnweite der Umfangsverzahnung 60 des Schneckenrades 58 durch Auswahl von Schneckenrädern mit unterschiedlichen Zahnlückenweiten (mittels unterschiedlicher Zähnezahl oder durch veränderten Durchmesser) eingestellt werden. Dies erfolgt vorteilhafter Weise nach Vermessen der zusammengebauten Einheit aus Tellerfederhebel, Antriebsfeder und Schneckenrad. Das für einen erwünschten Klickhub erforderliche Schneckenrad wird dann eingebaut und mittels des Abdeckbauteils 80 gesichert. Um mit unterschiedlichen Schneckenrädern sicher zusammenzuwirken, weist die Mitnehmerverzahnung 62 der Klinke 66 vorteilhaft nur einen Zahn auf.

Ein in Kombination mit der Auswahl eines geeigneten Schneckenrades oder unabhängig davon nutzbares Mittel zur Einstellung einer wohldefinierten und sicheren Verschleißnachstellung besteht darin, ein gewisses Maß an Klinkenweg vorzuhalten, der bei der Einstellung durch einen Todweg auf das notwendige Maß vermindert wird. Diesem Zweck dient die Führung des Führungsteils 84 innerhalb der Kulisse 86 mit dem Spiel w. Das Spiel w kann durch Austausch der Kulisse 86 bzw. des damit versehenen Anschlagbauteils 88 verändert werden, indem ein Anschlagbauteil mit geeignet ausgebildeter Kulisse eingebaut wird. Das Anschlagbauteil 88 kann mit dem Tellerfederhebel 22 verschraubt oder auch vernietet sein, wobei die Nieten zum Austausch des Anschlagbauteils 88 gelöst werden.

Die beschriebenen Maßnahmen zur Einstellung eines erwünschten Klickhubs oder auch eines erwünschten axialen Betätigungsweges am inneren Umfangsrand 26 des Tellerfederhebels 22 können in Kombination oder unabhängig voneinander vorgesehen sein. Dazu kann das Abdeckbauteil 80 auch zweiteilig ausgeführt sein, wobei ein Teil das Schneckenrad 58 sichert und das andere Teil das Führungsteil 84 in der Kulisse 86 sichert. Die mit einem definiertem Spiel bzw. Anschlag versehene Ausbildung der Befestigung des Endbereiches 44 der Antriebsfeder 34 am Tellerfederhebel 22 kann auch bei Ausführungsformen verwendet werden, bei denen die Nachstellung nicht mit Hilfe eines Schneckenrades oder eines sonstiges mit einer Umfangsverzahnung versehenen Zahnrades erfolgt. Bei der Ausführungsform ohne Schneckenrad, beispielsweise gemäß Fig. 3 kann die Verzahnung, in die die Klinke eingreift, in einem in einfacher Weise auswechselbaren Bauteil ausgebildet sein, durch dessen Auswechslung unterschiedliche Verzahnungen einsetzbar sind.

### Bezugszeichenliste

| | | | |
|---|---|---|---|
| 10 | Reibungskupplung | 66 | Klinke |
| 12 | Gehäuse | 68 | Schneckenrille |
| 14 | Gegendruckplatte | 70 | Gegenverzahnung |
| 16 | Anpressplatte | 72 | Bauteil |
| 18 | Reibbelag | 74 | Zuganker |
| 20 | Kupplungsscheibe | 76 | Rampenfläche |
| 22 | Tellerfederhebel | 80 | Abdeckbauteil |
| 23 | Ringscheibenbereich | 82 | Arm |
| 24 | Federzunge | 84 | Führungsteil |
| 25 | äußerer Umfangsrand | 86 | Kulisse |
| 26 | innerer Umfangsrand | 88 | Anschlagbauteil |
| 28 | Betätigungsglied | | |
| 29 | Rampenfläche | | |
| 30 | Rampenfläche | | |
| 31 | Nieten | | |
| 32 | Speichen | | |
| 34 | Antriebsfeder | | |
| 36 | Ringteil | | |
| 38 | Distanzstück | | |
| 42 | Spalt | | |
| 44 | Endbereich | | |
| 46 | Endbereich | | |
| 48 | Klinke | | |
| 50 | Federarm | | |
| 52 | Zahn | | |
| 54 | Verzahnung | | |
| 56 | Blattfederarm | | |
| 58 | Schneckenrad | | |
| 60 | Umfangsverzahnung | | |
| 62 | Mitnehmerverzahnung | | |
| 64 | Federarm | | |

## Patentansprüche

1. Tellerfederhebelbaugruppe zum Betätigen einer Reibungskupplung mit integriertem Verschleißausgleich, welche Tellerfederhebelbaugruppe einen Tellerfederhebel (22) und eine Antriebsfeder (34) enthält, welcher Tellerfederhebel einen in Umfangsrichtung durchgehenden, radial äußeren Ringscheibenbereich (23) aufweist, von dem axial einwärts gerichtete Federzungen (24) ausgehen, und welche Antriebsfeder einen mit einem mit einem radialen Spalt (42) versehenen Ringteil (36) aufweist, von dem radial einwärts gerichtete Speichen (32) ausgehen, die an dem Tellerfederhebel befestigt sind, wobei ein an einer Seite des Spaltes befindlicher Endbereich (44) des Ringteils zumindest in Umfangsrichtung relativ zur Antriebsfeder festgelegt ist und der auf der anderen Seite des Spaltes befindliche Endbereich (46) des Umfangsrings mit einer Klinke (66) versehen ist und die Anordnung der Antriebsfeder auf dem Tellerfederhebel derart ist, dass sich die Weite des Spaltes bei einer konischen Verformung des Tellerfederhebels ändert, wodurch sich die Klinke in Umfangsrichtung relativ zu dem in Umfangsrichtung festgelegten Endbereich bewegt und diese Bewegung für eine Verschleißnachstellung nutzbar ist, **dadurch gekennzeichnet, dass** der zumindest in Umfangsrichtung des Tellerfederhebels (22) festgelegte Endbereich (44) des Ringteils (36) der Antriebsfeder (34) ein starr an dem Tellerfederhebel befestigtes Anschlagbauteil (88) aufweist, in dem ein vom Ringteil ausgehender Arm (78) derart geführt ist, dass er in Umfangsrichtung begrenzt beweglich ist.

2. Tellerfederhebelbaugruppe nach Anspruch 1, **dadurch gekennzeichnet, dass** am Ende des Armes (78) ein Führungsteil (84) ausgebildet ist, das in einer in dem Anschlagbauteil (88) ausgebildeten Kulisse (86) in Umfangsrichtung um eine begrenzte Strecke beweglich geführt ist.

3. Tellerfederhebelbaugruppe nach Anspruch 1 oder 2, **dadurch gekennzeichnet, dass** das Anschlagbauteil (88) abnehmbar am Tellerfederhebel (22) befestigt ist.

4. Tellerfederhebelbaugruppe nach einem der Ansprüche 1 bis 3, **dadurch gekennzeichnet, dass** der Führungsteil (84) von einem Abdeckbauteil (80) überdeckt wird.

5. Tellerfederhebelbaugruppe nach einem der Ansprüche 1 bis 4, **dadurch gekennzeichnet, dass** an der Tellerfederhebelbaugruppe ein in seiner Position relativ zu dem an dem Tellerfederhebel (22) zumindest in Umfangsrichtung festgelegten Endbereich (44) des Ringteils (36) ein um eine zur Ebene des Tellerfederhebels etwa senkrechte Achse drehbares Zahnrad (58) gelagert ist, das mit einer Umfangsverzahnung (60) ausgebildet ist, die mit der Klinke (66) in in eine Drehbarkeitsrichtung des Zahnrades bewegungsübertragendem Eingriff ist und das mit Eingriffsmitteln versehen ist, die geeignet sind, bei einer Verdrehung des Zahnrades eine Verschleißnachstellung zu bewirken.

6. Tellerfederhebelbaugruppe nach Anspruch 5, **dadurch gekennzeichnet, dass** das Zahnrad (58) von einem an dem Anschlagsbauteil (88) befestigten Abdeckbauteil (80) überdeckt wird.

7. Tellerfederhebelbaugruppe zum Betätigen einer Reibungskupplung mit integriertem Verschleißausgleich, welche Tellerfederhebelbaugruppe einen Tellerfederhebel (22), eine Antriebsfeder (34) und ein Zahnrad (58) enthält, welcher Tellerfederhebel einen in Umfangsrichtung durchgehenden, radial äußeren Ringscheibenbereich (23) aufweist, von dem axial einwärts gerichtete Federzungen (24) ausgehen, und welche Antriebsfeder einen mit einem mit einem radialen Spalt (42) versehenen Ringteil (36) aufweist, von dem radial einwärts gerichtete Speichen (32) ausgehen, die an dem Tellerfederhebel befestigt sind, wobei ein an einer Seite des Spaltes befindlicher Endbereich (44) des Ringteils zumindest in Umfangsrichtung relativ zur Antriebsfeder festgelegt ist und der auf der anderen Seite des Spaltes befindliche Endbereich (46) des Umfangsrings mit einer Klinke (66) versehen ist und die Anordnung der Antriebsfeder auf dem Tellerfederhebel derart ist, dass sich die Weite des Spaltes bei einer konischen Verformung des Tellerfederhebels ändert, wodurch sich die Klinke in Umfangsrichtung relativ zu dem in Umfangsrichtung festgelegten Endbereich bewegt, und welches Zahnrad (58) an dem Tellerfederhebel um eine zur Ebene des Tellerfederhebels etwa senkrechte Achse drehbar gelagert ist und mit einer Umfangsverzahnung (60) ausgebildet ist, die mit der Klinke in in eine Drehbarkeitsrichtung des Zahnrades bewegungsübertragendem Eingriff ist und das mit Eingriffsmitteln versehen ist, die geeignet sind, bei einer Verdrehung des Zahnrades eine Verschleißnachstellung zu bewirken, wobei das Zahnrad in auswechselbarer Weise an der Tellerfederhebelbaugruppe angebracht ist.

8. Selbstnachstellende Reibungskupplung, enthaltend eine Tellerfederhebelbaugruppe (22, 34) nach einem der Ansprüche 1 bis 7.

9. Selbstnachstellende Reibungskupplung nach Anspruch 8, bei welcher sich ein radial äußerer Umfangsbereich des Tellerfederhebels (22) über Rampenflächen (76) an einem mit einer Anpressplatte der Reibungskupplung verbundenen Zuganker (74)abstützt und der Tellerhebel (22) sich radial innerhalb seiner Abstützung am Zuganker an seiner der Abstützung am Zuganker gegenüberliegenden Seite an einem gehäusefesten Bauteil (12) abstützt und ein radial innerer Umfangsrand (26) der Federzungen (24) für eine Betätigung der Reibungskupplung axial beweglich ist, wobei eine Verschleißnachstellung infolge einer überschwelligen Bewegung der Klinke (48;66) relativ zu dem zumindest in Umfangsrichtung des Tellerfederhebels festgelegten Endbereich (44) des Ringteils (36) der Antriebsfeder (34) zu einer Verdrehung des Tellerfederhebels relativ zu dem Zuganker führt.

## Claims

1. Plate spring lever assembly for actuating a friction clutch with integrated wear compensation, which plate spring lever assembly comprises a plate spring lever (22) and a driving spring (34), which plate spring lever has a radially outer annular disc region (23) which is continuous in the circumferential direction and from which extend axially inwardly directed spring tongues (24), and which driving spring has an annular part (36) which is provided with a radial gap (42) and from which extend radially inwardly directed spokes (32) which are fastened to the plate lever spring, wherein an end region (44), which is situated on one side of the gap, of the annular part is fixed relative to the driving spring at least in the circumferential direction, and the end region (46), which is situated on the other side of the gap, of the circumferential ring is provided with a pawl (66), and the arrangement of the driving spring on the plate spring lever is such that the width of the gap changes during a conical deformation of the plate spring lever, as a result of which the pawl moves in the circumferential direction relative to the end region which is fixed in the circumferential direction, and said movement can be utilized for a wear adjustment, **characterized in that** the end region (44), which is fixed at least in the circumferential direction of the plate spring lever (22), of the annular part (36) of the drive spring (34) has a stop component (88) which is rigidly fastened to the plate spring lever and in which an arm (78) which extends from the annular part is guided in such a way as to be movable to a limited extent in the circumferential direction.

2. Plate spring lever assembly according to Claim 1, **characterized in that**, on the end of the arm (78), there is formed a guide part (84) which is guided, so as to be movable over a limited path in the circumferential direction, in a slotted guide (86) formed in the stop component (88).

3. Plate spring lever assembly according to Claim 1 or 2, **characterized in that** the stop component (88) is detachably fastened to the plate spring lever (22).

4. Plate spring lever assembly according to one of Claims 1 to 3, **characterized in that** the guide part (84) is covered by a cover component (80).

5. Plate spring lever assembly according to one of Claims 1 to 4, **characterized in that**, on the plate spring lever assembly, there is mounted a gearwheel (58) rotatable in its position relative to the end region (44), which is fixed to the plate spring lever (22) at least in the circumferential direction, of the annular part (36) about an axis approximately perpendicular to the plane of the plate spring lever, which gearwheel (58) is formed with a circumferential toothing (60) which engages with the pawl (66) for a transmission of movement in a direction of rotatability of the gearwheel, and which gearwheel (58) is provided with engagement means suitable for effecting a wear adjustment in the event of a rotation of the gearwheel.

6. Plate spring lever assembly according to Claim 5, **characterized in that** the gearwheel (58) is covered by a cover component (80) fastened to the stop component (88).

7. Plate spring lever assembly for actuating a friction clutch with integrated wear compensation, which plate spring lever assembly comprises a plate spring lever (22), a driving spring (34) and a gearwheel (58), which plate spring lever has a radially outer annular disc region (23) which is continuous in the circumferential direction and from which extend axially inwardly directed spring tongues (24), and which driving spring has an annular part (36) which is provided with a radial gap (42) and from which extend radially inwardly directed spokes (32) which are fastened to the plate lever spring, wherein an end region (44), which is situated on one side of the gap, of the annular part is fixed relative to the driving spring at least in the circumferential direction, and the end region (46), which is situated on the other side of the gap, of the circumferential ring is provided with a pawl (66), and the arrangement of the driving spring on the plate spring lever is such that the width of the gap changes during a conical deformation of the plate spring lever, as a result of which the pawl moves in the circumferential direction relative to the end region which is fixed in the circumferential direction, and which gearwheel (58) is mounted on the plate lever spring so as to be rotatable about an axis approximately perpendicular to the plane of the plate spring lever, which gearwheel (58) is formed with a circumferential toothing (60) which engages with the pawl for a transmission of movement in a direction of rotatability of the gearwheel, and which gearwheel (58) is provided with engagement means suitable for effecting a wear adjustment in the event of a rotation of the gearwheel, wherein the gearwheel is mounted in an exchangeable manner on the plate spring lever assembly.

8. Self-adjusting friction clutch comprising a plate spring lever assembly (22, 34) according to one of Claims 1 to 7.

9. Self-adjusting friction clutch according to Claim 8, in which a radially outer circumferential region of the plate spring (22) is supported via ramp surfaces (76) on a tension anchor (74) connected to a pressure plate of the friction clutch, and the plate spring (22) is supported, radially within its support on the tension anchor and at its side opposite the support on the tension anchor, on a component (12) fixed with respect to a housing, and a radially inner circumferential edge (26) of the spring tongues (24) is axially movable for an actuation of the friction clutch, wherein a wear adjustment as a result of a movement of the pawl (48; 66) beyond a threshold relative to the end region (44), which is fixed at least in the circumferential direction of the plate spring lever, of the annular part (36) of the driving spring (34) leads to a rotation of the plate spring lever relative to the tension anchor.

## Revendications

1. Module de levier de ressort à disque pour l'actionnement d'un embrayage à friction à compensation de l'usure intégrée, lequel module de levier de ressort à disque contient un levier de ressort à disque (22) et un ressort d'entraînement (34), le levier de ressort à disque présentant une région de disque annulaire radialement extérieure (23) continue dans la direction périphérique, de laquelle partent des langues de ressort (24) orientées axialement vers l'intérieur, et le ressort d'entraînement présentant une partie annulaire (36) pourvue d'une fente radiale (42), de laquelle partent des rayons (32) orientés radialement vers l'intérieur, qui sont fixés sur le levier de ressort à disque, une région d'extrémité (44) de la partie annulaire se trouvant d'un côté de la fente étant fixée au moins dans la direction périphérique par rapport au ressort d'entraînement et la région d'extrémité (46) de la bague périphérique se trouvant de l'autre côté de la fente étant pourvue d'un cliquet (66) et l'agencement du ressort d'entraînement sur le levier de ressort à disque étant tel que la largeur de la fente varie dans le cas d'une déformation conique du levier de ressort à disque, de sorte que le cliquet se déplace dans la direction périphérique par rapport à la région d'extrémité fixée dans la direction périphérique et ce déplacement pouvant être utilisé pour un rattrapage de l'usure, **caractérisé en ce que** la région d'extrémité (44) de la partie annulaire (36) du ressort d'entraînement (34), fixée au moins dans la direction périphérique du levier de ressort à disque (22), présente un composant de butée (88) fixé rigidement au levier de ressort à disque, dans lequel est guidé un bras (78) partant de la partie annulaire, de telle sorte qu'il soit mobile de manière limitée dans la direction périphérique.

2. Module de levier de ressort à disque selon la revendication 1, **caractérisé en ce qu'**une partie de guidage (84) est réalisée à l'extrémité du bras (78), laquelle est guidée de manière déplaçable dans la direction périphérique dans une mesure limitée dans une coulisse (86) réalisée dans le composant de butée (88).

3. Module de levier de ressort à disque selon la revendication 1 ou 2, **caractérisé en ce que** le composant de butée (88) est fixé de manière amovible sur le levier de ressort à disque (22).

4. Module de levier de ressort à disque selon l'une quelconque des revendications 1 à 3, **caractérisé en ce que** la partie de guidage (84) est recouverte par un composant de recouvrement (80).

5. Module de levier de ressort à disque selon l'une quelconque des revendications 1 à 4, **caractérisé en ce que**, sur le module de levier de ressort à disque, une roue dentée (58) pouvant tourner autour d'un axe approximativement perpendiculaire au plan du levier de ressort à disque, est montée dans sa position par rapport à la région d'extrémité (44) de la partie annulaire (36) fixée sur le levier de ressort à disque (22) au moins dans la direction périphérique, laquelle roue dentée est réalisé avec une denture périphérique (60), qui est en prise avec le cliquet (66) en transmettant le mouvement dans une direction de rotation de la roue dentée, et qui est pourvue de moyens d'engagement qui sont appropriés pour provoquer un rattrapage de l'usure lors d'une rotation de la roue dentée.

6. Module de levier de ressort à disque selon la revendication 5, **caractérisé en ce que** la roue dentée (58) est recouverte par un composant de recouvrement (80) fixé au composant de butée (88).

7. Module de levier de ressort à disque pour l'actionnement d'un embrayage à friction à compensation de l'usure intégrée, lequel module de levier de ressort à disque contient un levier de ressort à disque (22), un ressort d'entraînement (34) et une roue dentée (58), le levier de ressort à disque présentant une région de disque annulaire radialement extérieure (23) continue dans la direction périphérique, de laquelle partent des langues de ressort (24) orientées axialement vers l'intérieur, et le ressort d'entraînement présentant une partie annulaire (36) pourvue d'une fente radiale (42), de laquelle partent des rayons (32) orientés radialement vers l'intérieur, qui sont fixés sur le levier de ressort à disque, une région d'extrémité (44) de la partie annulaire se trouvant d'un côté de la fente étant fixée au moins dans la direction périphérique par rapport au ressort d'entraînement et la région d'extrémité (46) de la bague périphérique se trouvant de l'autre côté de la fente étant pourvue d'un cliquet (66) et l'agencement du ressort d'entraînement sur le levier de ressort à disque étant tel que la largeur de la fente varie dans le cas d'une déformation conique du levier de ressort à disque, de sorte que le cliquet se déplace dans la direction périphérique par rapport à la région d'extrémité fixée dans la direction périphérique et la roue dentée (58) étant montée sur le levier de ressort à disque de manière à pouvoir tourner autour d'un axe approximativement perpendiculaire au plan du levier de ressort à disque et étant réalisée avec une denture périphérique (60) qui est en prise avec le cliquet en transmettant le mouvement dans une direction de rotation de la roue dentée, et qui est pourvue de moyens d'engagement qui sont appropriés pour provoquer un rattrapage de l'usure lors d'une rotation de la roue dentée, la roue dentée étant montée de manière remplaçable sur le module de levier de ressort à disque.

8. Embrayage à friction à auto-rattrapage, contenant un module de levier de ressort à disque (22, 34) selon l'une quelconque des revendications 1 à 7.

9. Embrayage à friction à auto-rattrapage selon la revendication 8, dans lequel une région périphérique radialement extérieure du levier de ressort à disque (22) s'appuie par le biais de surfaces en rampe (76) sur un tirant (74) connecté à un plateau de pression de l'embrayage à friction et le levier de ressort à disque (22) s'appuie radialement à l'intérieur de son support sur le tirant au niveau de son côté opposé au support sur le tirant, sur un composant (12) fixé au boîtier, et un bord périphérique radialement interne (26) des langues de ressort (24) est déplaçable axialement pour un actionnement de l'embrayage à friction, un rattrapage de l'usure, du fait d'un mouvement du cliquet (48 ; 66) au-delà d'un seuil par rapport à la région d'extrémité (44) de la partie annulaire (36) du ressort d'entraînement (34) fixée au moins dans la direction périphérique du levier de ressort à disque, conduisant à une rotation du levier de ressort à disque par rapport au tirant.
